# EUROPÄISCHE PATENTANMELDUNG

(11) **EP 0 989 767 A1**
(43) Veröffentlichungstag der Anmeldung: **29.03.2000**
(21) Anmeldenummer: 99117144.8
(22) Anmeldetag: 31.08.1999
(51) Int. Cl.: H04Q 7/30, H04B 7/005

(54) **Steuereinrichtung zur Zuweisung von Eingangssignalen zu Übertragungskanälen**

(30) Priorität: 31.08.1998 DE 19839633
(71) Anmelder: SIEMENS AKTIENGESELLSCHAFT, 80333 München (DE)
(72) Erfinder: Helms, Jochen, Dr., 81673 München (DE)

(57) **Zusammenfassung**

Eine Steuereinrichtung ist mit zumindest einer Sendeeinrichtung für mehrere Trägerfrequenzen eines breitbandigen Sendespektrums, die einen die Trägerfrequenzen umfassenden, breitbandigen Leistungsverstärker zum Verstärken der Eingangssignale in ein leistungsstärkeres Ausgangssignal aufweist, verbunden. Die Zuweisung der Eingangssignale zu den Übertragungskanälen führt die Steuereinrichtung derart durch, daß eine vorgegebene maximale Sendeleistung des Ausgangssignals in den jeweiligen Zeitschlitzen nicht überschritten wird. Ein Übertragungskanal ist dabei gemäß dem Funk-Kommunikationssystem zumindest durch eine Trägerfrequenz und einen Zeitschlitz definiert.

## Beschreibung

Die Erfindung betrifft eine Steuereinrichtung zur Zuweisung von Eingangssignalen zu Übertragungskanälen in einem Funk-Kommunikationssystem, insbesondere in einem Mobilfunksystem oder einem drahtlosen Teilnehmerzugangssystem.

In Funk-Kommunikationssystemen nach dem Stand der Technik, wie beispielsweise dem digitalen GSM-Mobilfunksystem (Global System for Mobile Communications), erfolgt eine Regelung der Sendeleistung für die Übertragung von Funksignalen über eine Funkschnittstelle zwischen einer sendenden Basisstation des Funk-Kommunikationssystems und einer empfangenden Funkstation in Abhängigkeit von einer jeweiligen Entfernung zwischen der Basisstation und der empfangenden Funkstation sowie von den vorhandenen Ausbreitungsbedingungen für die gesendeten Funksignale. Die Sendeleistung in der Basisstation wird dabei derart geregelt, daß immer nur mit der für einen gesicherten Empfang an dem Ort der Funkstation benötigten Sendeleistung gesendet wird. Hierdurch wird vorteilhaft die Interferenz innerhalb des Funkversorgungsbereiches der Basisstation und die Interferenz zwischen den einzelnen Funkversorgungsbereichen mehrerer benachbarter Basisstationen verringert und die Übertragungsqualität erhöht. In dem GSM-Mobilfunksystem erfolgt die Regelung der Sendeleistung unter anderem aufgrund von Messungen der Empfangsstärke durch die empfangende Funkstation und einer Übertragung der Meßergebnisse zu der Basisstation.

Eine Basisstation eines GSM-Mobilfunksystems ist durch ihre technische Austattung in der Lage, Funksignale auf mehreren Trägerfrequenzen gleichzeitig zu senden. Gleichzeitig wird eine Teilnehmerseparierung, d.h. eine Unterscheidung von Funksignalen für mehrere empfangende Funkstationen, durch eine jeweilige Unterteilung der Trägerfrequenzen in mehrere Zeitschlitze vorgenommen. In Funk-Kommunikationssystemen der zukünfigen 3. Generation UMTS (Universal Mobile Telecommunication System) wird zusätzlich eine Unterscheidung nach Spreizkodes (CDMA-Kodes) zur flexibleren Zuweisung der Übertragungskapazität durchgeführt werden.

Die einzelnen schmalbandigen Trägerfrequenzen werden in den GSM-Basisstationen nach dem Stand der Technik in parallel geführten und trägerfrequenzorientierten Sendeeinrichtungen digital/analog-gewandelt und in einem für die jeweilige Trägerfrequenz vorgesehenen Leistungsverstärker verstärkt. Die Ausgangssignale der Leistungsverstärker werden direkt zu jeweils trägerfrequenzbezogene Antenneneinrichtungen geleitet oder alternativ durch eine Zusammenführung in Kombinationseinrichtungen (Hybriden) auf eine zentrale Antenneneinrichtung geleitet. Die einzelnen Sendepfade werden dabei durch Isolatoren gegeneinander abgeschirmt. Durch diese trägerfrequenzbezogene Bauweise der Basisstationen ergibt sich negativ ein hoher technischer und finanzieller Aufwand.

Eine Lösung dieses Problems liegt in der Verwendung von breitbandigen Sendeeinrichtungen in den Basisstationen. Breitbandige Sendeeinrichtungen für mehrere Trägerfrequenzen besitzen gegenüber den bekannten trägerfrequenzbezogenen Sendeeinrichtungen den Vorteil, daß sie einerseits durch die Einsparung von Kombinationseinrichtungen, Filterelementen und Antenneneinrichtungen kostengünstiger zu realisieren sind, andererseits die Dämpfung in dem Sendepfad durch den Wegfall der Kombiniereinrichtungen verringert wird und hierdurch der Leistungsverstärker mit einer geringeren Leistung arbeiten kann.

Der Einsatz derartiger breitbandiger Sendeeinrichtungen wird durch einen verfügbaren Dynamikbereich beschränkt, der bei einer gegebeten Schaltungstechnik durch die einzelnen Komponenten der Sendeeinrichtung definiert wird. Diese Komponenten, wie beispielsweise der Digital/Analog-Wandler und der Leistungsverstärker, weisen unter bestimmten Einsatzbedingungen ein nichtlineares Verhalten auf, welches nachteilig eine unzureichende Intermodulations-Unterdrückung zur Folge hat und somit den möglichen Dynamikbereich beschränkt. Durch Maßnahmen zur Entzerrung der Ausgangssignals, wie sie beispielsweise aus der älteren Anmeldung 19729182.1 bekannt sind, kann eine bestimmte Linearisierung erreicht werden.

Bei beispielsweise N Trägerfrequenzen verringert sich der Dynamikbereich D für jede Trägerfrequenz auf D/N², da die zulässige Summenamplitude des Sendepfades begrenzt ist. Bei einem gegebenen Störabstand S zwischen Nutzsignalen und Störprodukten muß bei der breitbandigen Sendeeinrichtung der verfügbare Dynamikbereich D so dimensioniert sein, daß bei den erwähnten N Trägerfrequenzen S=D/N² gilt. Hieraus wird deutlich, daß beispielsweise eine Erhöhung der Anzahl der Trägerfrequenzen N ohne eine notwendige Erhöhung des verfügbaren Dynamikbereichs für alle Trägerfrequenzen bzw. ohne eine Verringerung des Störabstands S für die jeweiligen Trägerfrequenzen nicht möglich ist.

Der Erfindung liegt die Aufgabe zugrunde, eine Erhöhung der von einer breitbandigen Sendeeinrichtung unterstützten Anzahl Trägerfrequenzen zu ermöglichen. Diese Aufgabe wird gemäß der Erfindung durch die Merkmale des unabhängigen Patentanspruchs 1 gelöst. Vorteilhafte Ausgestaltungen der Erfindung sind den jeweiligen Unteransprüchen zu entnehmen.

Erfindungsgemäß ist eine Steuereinrichtung zur Zuweisung von Eingangssignalen zu Übertragungskanälen in einem Funk-Kommunikationssystem mit zumindest einer Sendeeinrichtung für mehrere Trägerfrequenzen eines breitbandigen Sendespektrums, die einen die Trägerfrequenzen umfassenden, breitbandigen Leistungsverstärker zum Verstärken der Eingangssignale in ein leistungsstärkeres Ausgangssignal aufweist, verbunden. Die Zuweisung der Eingangssignale zu den Übertragungskanälen führt die Steuereinrichtung dabei derart durch, daß eine vorgegebene maximale Sendeleistung des Ausgangssignals in den jeweiligen Zeitschlitzen nicht überschritten wird. Ein Übertragungskanal ist dabei gemäß dem Funk-Kommunikationssystem zumindest durch eine Trägerfrequenz und einen Zeitschlitz definiert.

Diese erfindungsgemäße Ausgestaltung nutzt vorteilhaft die Tatsache, daß unter realen Bedingungen bei der funktechnischen Versorgung einer Funkzelle durch die Sendeeinrichtung nicht für jeden Übertragungskanal die maximale Sendeleistung benötigt wird. Aus diesem Grund ist eine Summierung der maximalen Sendeleistung aller Trägerfrequenzen zur Ermittlung der benötigten Gesamtdynamik der breitbandigen Sendeeinrichtung, wie es in der Beschreibungseinleitung beschrieben wurde, für die gegebene Anzahl Trägerfrequenzen nicht erforderlich.

Durch die erfindungsgemäße Limitierung der maximalen Ausgangsleistung in einem Zeitschlitz wird vorteilhaft eine Reduzierung der erforderlichen Dynamik oder eine entsprechende Erhöhung der Anzahl der Trägerfrequenzen erreicht. Eine reduzierte Dynamik kann beispielsweise vorteilhaft in der Weise umgesetzt werden, daß ein dem Leistungsverstärker vorgeschalteter Digital-Analog-Wandler mit einer geringeren Bitbreite ausgelegt werden kann, oder daß der Leistungsverstärker in einem linearen Bereich arbeitet. Weiterhin kann vorteilhaft der Störabstand zwischen den einzelnen Trägerfrequenzen erhöht werden oder bei einem gegebenen Störabstand die Anzahl der Trägerfrequenzen erhöht werden, wodurch die Sendeeinrichtung eine größere Anzahl Übertragungskanäle gleichzeitig verarbeiten kann.

Gemäß einer ersten Weiterbildung der Erfindung wird ein Übertragungskanal zusätzlich durch einen Spreizkode (CDMA-Kode) definiert. Dieses ermöglicht vorteilhaft eine flexiblere Zuweisung von Übertragungskanälen zu Kommunikationsverbindungen, wobei einer Kommunikationsverbindung mit einem hohen Bedarf an Übertragungskapazität innerhalb eines Frequenzbandes auch mehrere Spreizkodes und Zeitschlitze zugewiesen werden können.

Einer weiteren Weiterbildung zufolge weist die Steuereinrichtung eine Auswerteeinrichtung zum Auswerten von Messungen von aktuellen Übertragungseigenschaften der Übertragungskanäle auf einer Funkschnittstelle zwischen der Sendeeinrichtung und einer oder mehreren empfangenden Funkstationen, die sich in einem Funkversorgungsbereich der Sendeeinrichtung befinden, auf. Durch diese Auswerteeinrichtung ist der Steuereinrichtung bekannt, mit welcher Sendeleistung die einzelnen Übertragungskanäle für die Signalübertragung zu den empfangenden Funkstationen gesendet werden müssen. Aufgrund dieses Wissens kann die Steuereinrichtung eine Zuweisung der Eingangssignale zu den Übertragungskanälen abhängig von den jeweils benötigten Sendeleistungen durchführen, so daß die vorgegebene maximale Sendeleistung nicht überschritten wird. Die jeweils benötigte Sendeleistung kann dabei, wie aus dem Stand der Technik gemäß der Beschreibungseinleitung bekannt, von den empfangenden Funkstationen signalisiert werden, die Messungen zur Bestimmung der Empfangsqualität vornehmen.

Einer weiteren Weiterbildung der Erfindung zufolge summiert die Auswerteeinrichtung die aktuell erforderlichen Sendeleistungen für die einzelnen Übertragungskanäle der jeweiligen Zeitschlitze und vergleicht diese mit einem Schwellwert für die vorgegebene maximale Sendeleistung. Bei einem Überschreiten des Schwellwertes wird ein Intrazellhandover für bestimmte Eingängssignale initiiert. Die Durchführung eines Intrazellhandovers bedeutet in diesem Fall, daß die ausgewählten Eingangssignale jeweils einem anderen Zeitschlitz oder auch einer anderen Trägerfrequenz zugewiesen werden, wobei die Zuweisung innerhalb der Sendeeinrichtung erfolgt.

Vorteilhaft ist durch diese Ausgestaltung möglich, daß die Steuereinrichtung ein dynamisches Intrazellhandover abhängig von den jeweils benötigten Sendeleistungen vornimmt, um in den jeweiligen Zeitschlitzen eine möglichst geringe Sendeleistung zu erhalten. Hierdurch kann die Anzahl der Trägerfrequenzen und somit die Anzahl der Übertragungskanäle dynamisch erhöht und somit beispielsweise den Bedarfsverhältnissen bei der Funkversorgung angepaßt werden. Vorteilhaft kann somit eine Kapazitätserhöhung innerhalb des Funkversorgungsbereiches der Sendeeinrichtung erreicht werden. Wird dahingegen die Anzahl der Trägerfrequenzen und somit die Anzahl der Übertragungskanäle konstant gehalten, so kann durch die jeweils minimierte Sendeleistung in den Zeitschlitzen eine vorteilhafte Energieeinsparung erreicht werden.

Denkbar ist dabei auch, daß mehrere Schwellwerte für jeweils maximale Sendeleistungen definiert werden, wobei der niedrigste Schwellwert eine höchste Anzahl Trägerfrequenzen ermöglicht. Abhängig vom Unterschreiten eines jeweiligen Schwellwertes wird die Anzahl der Übertragungskanäle verändert und somit die Kapazität in dem Funkversorgungsbereich der Sendeeinrichtung dynamisch angepaßt. Weiterhin können in der Auswerteeinrichtung Abschätzungen über die zukünftig jeweils zu erwartenden Sendeleistungen für die einzelnen Übertragungskanäle gemacht werden, und auf der Grundlage dieser Abschätzungen ein vorzeitiger Intrazellhandover initiiert werden bzw. die Anzahl der Übertragungskanäle begrenzt werden.

Gemäß einer weiteren Ausgestaltung der Erfindung führt die Steuereinrichtung eine Steuerung von Amplituden der jeweiligen Übertragungskanäle durch trägerfrequenzbezogene Amplitudeneinstelleinrichtungen in der Sendeeinrichtung durch. Hierdurch kann die Steuereinrichtung die Eingangssignale den jeweiligen Übertragungskanälen, die jeweils trägerfrequenzbezogen sind, derart zuweisen, daß die einzelnen Komponenten der trägerfrequenzbezogenen Sendepfade gleichmäßig belastet werden.

Die erfindungsgemäße Steuereinrichtung kann gemäß weiteren alternativen Weiterbildungen in einer Basisstation des Funk-Kommunikationssystems oder in einer Basisstations-Steuerung verwirklicht ist, wobei die Sendeeinrichtung in einer Basisstation verwirklicht ist.

Ausführungsbeispiele der Erfindung werden anhand der beiliegenden Zeichnungen näher erläutert.

Dabei zeigen
- FIG 1: ein Blockschaltbild eines Funk-Kommunikationssystems, insbesondere eines Mobilfunksystems,
- FIG 2: eine schematische Darstellung der Rahmenstruktur der Funkschnittstelle des Funk-Kommunikationssystems, und
- FIG 3: ein Blockschaltbild eines Teils eines Basisstationssystems.

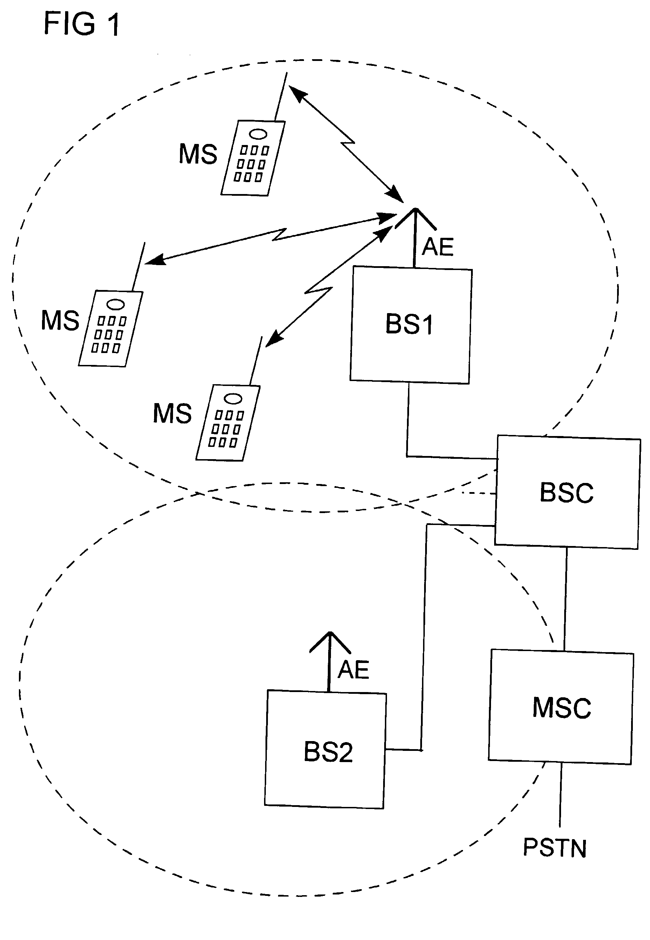

Das in FIG 1 dargestellte Funk-Kommunikationssystem entspricht in seiner Struktur einem bekannten GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Basisstations-Steuerung BSC verbunden. Jede Basisstations-Steuerung BSC ermöglicht wiederum eine Verbindung zu zumindest einer Basisstation BS, in dem dargestellten Fall zu einer ersten BS1 und einer zweiten Basisstation BS2. Diese Basisstationen BS1 und BS2 sind Funkstationen, die über eine Funkschnittstelle Kommunikationsverbindungen zu weiteren Funkstationen, in dem dargestellten Fall zu mobilen Funkstationen MS aufbauen und auslösen können. In FIG 1 bestehen beispielhaft Kommunikationsverbindungen zur Übertragung von Nutzdaten und Signalisierungsinformationen zwischen mobilen Funkstationen MS und der ersten Basisstation BS1.

Die Funktionalität dieser Struktur wird von dem Funk-Kommunikationssystem nach der Erfindung genutzt; sie ist jedoch auch auf andere Funk-Kommunikationssysteme, wie beispielsweise dem drahtlosen Teilnehmerzugangssystem (Access-Networks) und Mobilfunksysteme der zweiten und dritten Generation übertragbar, in denen die Erfindung zum Einsatz kommen kann.

Die Basisstationen BS1, BS2 sind mit jeweils einer Antenneneinrichtung AE verbunden, die einen Funkversorgungsbereich mit funktechnischen Ressourcen versorgt. Alternativ können die Antenneneinrichtung auch z.B. aus drei Einzelstrahlern bestehen. Jeder der Einzelstrahler strahlt gerichtet in einen Sektor des jeweiligen Funkversorgungsbereiches. Weiterhin kann auch eine größere Anzahl von Einzelstahlern (gemäß adaptiver Antennen) eingesetzt werden, so daß auch eine räumliche Teilnehmerseparierung nach einem SDMA-Verfahren (Space Division Multiple Access) ermöglicht wird.

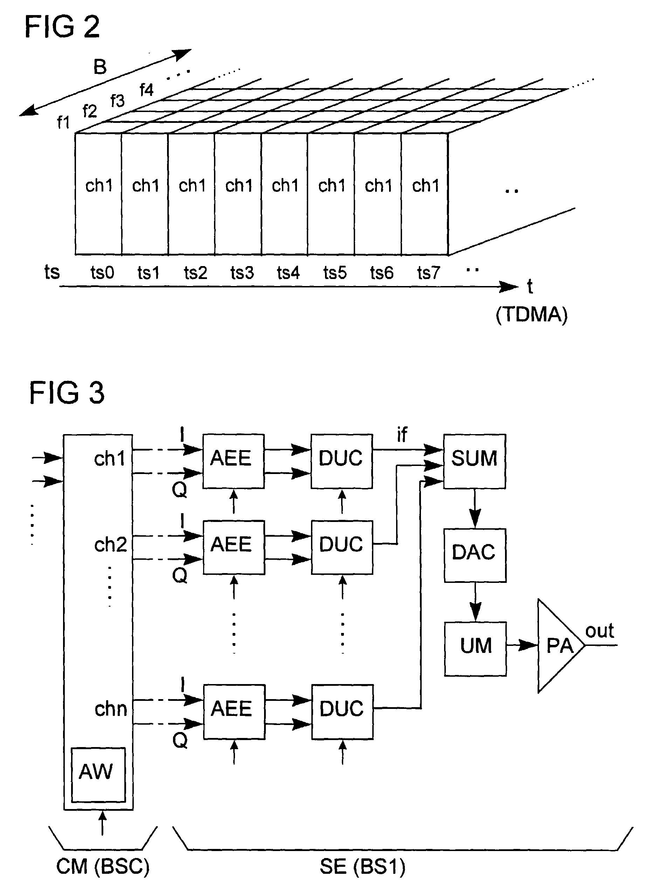

Die Rahmenstruktur der Funkschnittstelle ist aus FIG 2 ersichtlich. Gemäß einer TDMA-Komponente ist eine Aufteilung eines breitbandigen Frequenzbereiches, beispielsweise der Bandbreite B = 1,6 MHz, in mehrere Frequenzkanäle f1, f2,..., beispielsweise acht Frequenzkanäle mit jeweils 200 kHz Bandbreite und zusätzlich eine Unterteilung der jeweiligen Frequenzkanäle f1, f2,... in mehrere Zeitschlitze, beispielsweise acht Zeitschlitze ts0 bis ts7, wie in dem GSM-Mobilfunksystem vorgesehen. Jeder Zeitschlitz innerhalb eines Frequenzkanals f1, f2, ... bildet einen Übertragungskanal ch1, ch2,... . Innerhalb der Frequenzkanäle f1, f2, ... werden somit Nutzdaten und Signalisierungsinformationen mehrerer Verbindungen in zeitlich getrennten Funkblöcken übertragen. Diese Funkblöcke zur Nutzdatenübertragung bestehen aus Abschnitten mit Daten, in denen jeweils Abschnitte mit empfangsseitig bekannten Trainingssequenzen eingebettet sind. Die Daten können zusätzlich verbindungsindividuell mit einer Feinstruktur, einem Spreizkode (CDMA-Kode), gespreizt werden, so daß empfangsseitig eine bestimmte Anzahl Verbindungen durch diese CDMA-Komponente separierbar sind. Einer Basisstation der Funk-Kommunikationssystems können mehrere Frequenzbereiche B zugeordnet sein, wobei für jeden Frequenzbereich jeweils eine Sendeeinrichtung vorgesehen ist.

Innerhalb des breitbandigen Frequenzbereiches B werden die auffeinanderffolgenden Zeitschlitze ts0, ts1, ... nach einer Rahmenstruktur gegliedert. So werden acht Zeitschlitze ts0 bis ts7 zu einem Rahmen zusammengefaßt, wobei ein bestimmter Zeitschlitz des Rahmens einer Trägerfrequenz einen Frequenzkanal zur Nutzdatenübertragung bildet und wiederkehrend von einer Verbindung genutzt wird. Weitere Frequenzkanäle, beispielsweise zur Frequenz- oder Zeitsynchronisation der Funkstationen MS werden nicht in jedem Rahmen, jedoch zu vorgegebenen Zeitpunkten innerhalb eines Multirahmens eingeführt. Die Abstände zwischen diesen Frequenzkanälen bestimmen die Kapazität, die das Funk-Kommunikationssystem daffür zur Verfügung stellt.

Die FIG 3 zeigt ein Blockschaltbild einer erfindungsgemäßen Steuereinrichtung CM und damit verbundenen Komponenten einer Sendeeinrichtung SE. Die Steuereinrichtung CM kann dabei in einer Basisstations-Steuerung BSC des Funk-Kommunikationssystems und die Sendeeinrichtung SE in einer Basisstation BS1 verwirklicht sein.

Die Eingangssignale in1, in2, ... sind von der Netzseite kommende Nutzdaten oder Signalisierungsinformationen, die zu jeweiligen empfangenden Funkstationen MS übertragen werden sollen. Diese Eingangssignale in1, in2,... liegen in digitaler Form als logische Kanäle vor. Aufgabe der Steuereinrichtung CM ist es, den Eingangssignalen in1, in2,... jeweils trägerfrequenzspezifische Übertragungskanäle ch1, ch2,... in dem gleichen oder in unterschiedlichen Zeitschlitzen ts1, ts2,... für eine Funkübertragung gemäß dem verwendeten Teilnehmerseparierungsverfahren zuzuweisen. Diese Zuweisung erfolgt nach einer Auswertung von Messungen der jeweils empfangenden Funkstationen MS bezüglich den Übertragungs- bzw. Empfangsverhältnissen. Die Funkstationen MS führen diese Messungen in regelmäßigen zeitlichen Abständen durch und signalisieren die Ergebnisse der versorgenden Basisstation BS1. Aufgrund dieser Messungen wird in der Sendeeinrichtung SE der Basisstation BS1 eine Regelung der jeweiligen Sendeleistung für die einzelnen Verbindungen durchgeführt, so daß nur mit der jeweils kleinst möglichen Sendeleistung gesendet wird. Durch eine derartige Regelung wird vorteilhaft das Intrazell- und Interzell-Interferenz verringert.

Die Messungen der empfangenden Funkstationen MS werden in einer Auswerteeinrichtung AW in der Steuereinrichtung CM ausgewertet und die entsprechenden Sendeleistungen für die Übertragungskanäle ch1, ch2, ... bestimmt. Die Auswerteeinrichtung AW kann alternativ auch separat oder in dem Empfangszweig der Basisstation BS1, BS2 verwirklicht sein. Aufgrund der jeweils benötigten minimalen Sendeleistungen führt die Steuereinrichtung CM eine Zuteilung der Eingangssignale in1, in2,.. zu den Übertragungskanälen ch1, ch2,..., chn durch, wobei sie für jeden Zeitschlitz ts1, ts2, ... jeweils einen Vergleich mit der maximal möglichen Sendeleistung der breitbandigen Sendeeinrichtung vornimmt. Diese maximale Sendeleistung kann als ein fest vorgegebener Schwellwert definiert sein, der für den Betrieb der Sendeeinrichtung nicht überschritten werden darf. Weiterhin können beispielsweise auch mehrere Schwellwerte definiert sein, so daß entsprechend dem möglichen Unterschreiten des jeweiligen Schwellwertes die Anzahl der Trägerfrequenzen f1, f2, ... erhöht werden kann.

Überschreitet in diesem Vergleich die summierte Gesamtsendeleistung der einzelnen Übertragungskanäle ch1, ch2,..., chn innerhalb eines Zeitschlitzes den Schwellwert, so initiiert die Steuereinrichtung CM einen Intrazellhandover für bestimmte Eingangssignale in jeweils einen anderen Zeitschlitz und gegebenenfalls in einen anderen Frequenzkanal. Das Intrazellhandover wird der jeweils empfangenden Funkstation MS dabei beispielsweise gemäß dem Stand der Technik des GSM-Mobilfunksystems signalisiert. Hierdurch kann die Steuereinrichtung CM eine bestmögliche Verteilung der Sendeleistungen auf die einzelnen Zeitschlitze ts1, ts2,... vornehmen. Vorteilhaft ist somit eine Erhöhung der Anzahl Trägerfreguenzen f1, f2,... oder bei festgelegter Anzahl Trägerfrequenzen durch die Begrenzung der Dynamik eine energiesparende Betriebsweise der Sendeeinrichtung gegeben.

Weiterhin ist denkbar, daß die Steuereinrichtung CM nur eine Zuteilung der Eingangssignale zu den Übertragungskanälen durchführt, wenn innerhalb des jeweiligen Frequenzkanals eine große Anzahl von Übertragungskanälen bereitgestellt werden muß bzw. eine bestimmte Anzahl Übertragungskanäle überschritten wird. Hierdurch kann die Signalisierungslast für den Intrazell-Handover verringert werden. Wird die maximale Sendeleistung bzw. ein vorgegebener schwellwert für die Sendeleistung bei der aktuellen Verkehrslast unterschritten, so kann von einer Optimierung innerhalb eines Zeitrahmens hinsichtlich einer minimalen Sendeleistung abgesehen werden.

Die jeweils einem trägerfrequenz- und zeitschlitzbezogenen Übertragungskanal ch1, ch2,... zugewiesenen Eingangssignale in1, in2,... sind digitalisiert und bestehen folglich aus einer In-Phasen-Komponente I und einer Quadratur-Komponente Q. Diese Komponenten I, Q der Eingangssignale in1, in2,... werden einer trägerfrequenzbezogenen digitalen Amplitudeneinstelleinrichtung AEE in der Sendeeinrichtung SE zugeführt. Die digitalen Amplitudeneinstelleinrichtungen AEE werden durch die Steuereinrichtung CM angesteuert, die eine Sendeleistungsregelung aufgrund der Meßergebnisse der jeweiligen Funkstationen MS vornimmt.

Anschließend werden die trägerfreguenzbezogenen Eingangssignale in1, in2,... jeweils digitalen Aufwärtskonvertiereinheiten DUC zugeführt. Diese Aufwärtskonvertiereinrichtungen DUC nehmen eine Umsetzung auf digitale Zwischenfrequenzen if vor. Anschließend werden die digitalen Datenströme der Zwischenfrequenzen if in einer Summiereinrichtung SUM summiert und einem Digital/Analog-Wandler DAC zugeführt, der das Signal der Zwischenfrequenzen if in ein analoges Signal wandelt. Anschließend wird das analoge Signal in einem Aufwärtsmischer UM moduliert und in die jeweiligen Sendefrequenzen transformiert. Vor und nach dem Aufwärtsmischer UM werden - nicht dargestellte - Bandfilter eingesetzt, die das entsprechende Frequenzband der einzelnen Trägerfrequenzen begrenzen. Das Ausgangssignal wird daraufhin einem breitbandigen Leistungsverstärker PA zugeführt, der eine Leistungsverstärkung vornimmt. Das Ausgangssignal out des Leistungsverstärkers PA wird einer Antenneneinrichtung AE der Basisstation BS1, BS2 zugeführt und von dieser gesendet.

## Patentansprüche

1. Steuereinrichtung (CM) zur Zuweisung von Eingangssignalen (in1, in2,...) zu Übertragungskanälen (ch1, ch2,...) in einem Funk-Kommunikationssystem, wobei ein Übertragungskanal (ch1, ch2, ...) zumindest durch eine Trägerfrequenz (f1, f2, ...) und einen Zeitschlitz (ts1, ts2, ...) definiert ist, die
- mit zumindest einer Sendeeinrichtung (SE) für mehrere Trägerfrequenzen (f1, f2, ...) eines breitbandigen Sendespektrums (B), die einen die Trägerfrequenzen (f1, f2, ...) umfassenden, breitbandigen Leistungsverstärker (PA) zum Verstärken der Eingangssignale (in1, in2, ...) in ein leistungsstärkeres Ausgangssignal (out) aufweist, verbunden ist, und
- die Zuweisung der Eingangssignale (in1, in2, ...) zu den Übertragungskanälen (ch1, ch2, ...) derart durchführt, daß eine vorgegebene maximale Sendeleistung des Ausgangssignals (out) in den jeweiligen Zeitschlitzen (ts0, ts1, ...) nicht überschritten wird.

2. Steuereinrichtung (CM) nach Anspruch 1, bei der
die Eingangssignale (in1, in2, ...) zusätzlich jeweils einem CDMA-Kode zur Definition eines Übertragungskanals (ch1, ch2, ...) zugewiesen werden.

3. Steuereinrichtung (CM) nach einem der vorhergehenden Ansprüche,
mit einer Auswerteeinrichtung (AW) zum Auswerten von Messungen von Übertragungseigenschaften der Übertragungskanäle (ch1, ch2, ...) auf einer Funkschnittstelle zwischen der Sendeeinrichtung und einer oder mehreren empfangenden Funkstationen (MS).

4. Steuereinrichtung (CM) nach einem der vorhergehenden Ansprüche,
bei der die Auswerteeinrichtung (AW) die aktuell erforderlichen Sendeleistungen für die einzelnen Übertragungskanäle (ch1, ch2, ...) der jeweiligen Zeitschlitze (ts1, ts2, ...) summiert und mit einem Schwellwert für die vorgegebene maximale Sendeleistung vergleicht, wobei bei einem Überschreiten des Schwellwertes ein Intrazellhandover für bestimmte Eingangssignale (in1, in2, ...) initiiert wird.

5. Steuereinrichtung (CM) nach einem der vorhergehenden Ansprüche,
die eine Steuerung von Amplituden der jeweiligen Übertragungskanäle (ch1, ch2, ...) durch trägerfrequenzbezogene Amplitudeneinstelleinrichtungen (AEE) in der Sendeeinrichtung (SE) durchführt.

6. Steuereinrichtung (CM) nach einem der vorhergehenden Ansprüche,
die in einer Basisstation (BS1, BS2) des Funk-Kommunikationssystems verwirklicht ist.

7. Steuereinrichtung (CM) nach einem der Ansprüche 1 bis 5, die in einer Basisstations-Steuerung (BSC) des Funk-Kommunikationssystems verwirklicht ist, wobei die Sendeeinrichtung (SE) in einer Basisstation (BS1, BS2) des Funk-Kommunikationssystems verwirklicht ist.
